# FASCICULE DE BREVET EUROPEEN

(11) **EP 1 219 144 B1**
(45) Date de publication et mention de la délivrance du brevet: **01.12.2004**
(21) Numéro de dépôt: 00964294.3
(22) Date de dépôt: 15.09.2000
(51) Int. Cl.: H05B 6/68, H05B 1/02, F24C 7/08

(54) **DISPOSITIF D'ASSISTANCE DE PREPARATION CULINAIRE**
KOCHVORBEREITUNGSHILFEVORRICHTUNG
COOKING AID DEVICE

(30) Priorité: 17.09.1999 FR 9911810
(43) Date de publication de la demande: 03.07.2002
(73) Titulaire: SEB S.A., 69130 Ecully (FR)
(72) Inventeur: DESCHENES, Laurent, F-14280 Saint-Germain-la-Blanche-Herbe (FR); PIOLET, Anne-Marie, F-14750 Saint Aubin sur Mer (FR)
(74) Mandataire: Kiehl, Hubert
(86) Numéro de dépôt international: PCT/FR2000/002556
(87) Numéro de publication internationale: WO 2001/022780

(56) Documents cités:
- EP-A- 0 660 047
- DE-A- 4 010 998

## Description

L'invention se rapporte à un dispositif d'assistance de préparation culinaire et à un procédé mis en oeuvre dans un tel dispositif ; elle concerne le domaine de l'électroménager.

L'invention a pour but principal de mettre à disposition de l'utilisateur un choix de recettes de cuisine et de le guider dans la réalisation de ces recettes, en simplifiant l'utilisation des appareils électroménagers nécessaires à la préparation.

Pour cela, l'invention propose un procédé d'assistance de préparation culinaire consistant à aider un utilisateur à réaliser une préparation culinaire préenregistrée de son choix au moyen d'une pluralité d'appareils électroménagers et d'un appareil de contrôle et de commande, procédé comportant les étapes suivantes :
■ l'utilisateur sélectionne une préparation culinaire sur l'appareil de contrôle et de commande ;
■ l'appareil de contrôle et de commande affiche les étapes de réalisation de la préparation culinaire sélectionnée ;
■ au début d'au moins une étape de réalisation de la préparation culinaire, l'appareil de contrôle et de commande reçoit un signal significatif de l'état d'au moins un des appareils électroménagers ;
■ durant au moins une étape de réalisation de la préparation culinaire, l'appareil de contrôle et de commande émet un signal de commande vers au moins un des appareils électroménagers ;
■ à la fin de chaque étape de réalisation de la préparation culinaire, l'appareil de contrôle et de commande reçoit un signal de fin d'étape.

Un dispositif est également proposé par l'invention, qui permet la mise en oeuvre du procédé constituant l'autre objet de l'invention.

Il s'agit d'un dispositif d'assistance de préparation culinaire, comportant une pluralité d'appareils électroménagers et un appareil de contrôle et de commande à distance desdits appareils électroménagers, l'appareil de contrôle et de commande étant pourvu de moyens d'affichage et de moyens de sélection, et étant destiné à recevoir des signaux d'état caractéristiques de l'état desdits appareils électroménagers et à émettre vers eux des signaux de commande.

Suivant l'invention, les moyens de sélection permettent à un utilisateur de sélectionner une préparation culinaire préalablement enregistrée et modélisée comme une séquence d'étapes de préparation, dont certaines prises isolément constituent une phase élémentaire assistée mettant en oeuvre un premier groupe d'appareils électroménagers en associant à chacun d'eux des paramètres de fonctionnement, et en ce que, au cours d'au moins une phase élémentaire assistée, l'appareil de contrôle et de commande reçoit un signal d'état de chacun des appareils électroménagers d'un deuxième groupe, et émet vers chacun des appareils électroménagers du premier groupe un signal de commande dépendant d'une part desdits signaux d'état et d'autre part des paramètres de fonctionnement associés à chacun des appareils électroménagers du premier groupe et à ladite phase élémentaire assistée.

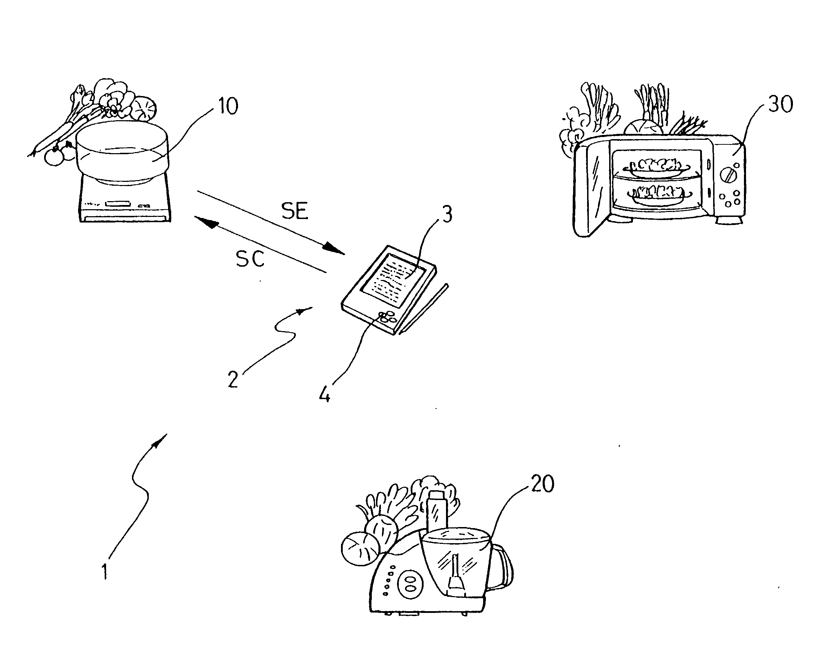

D'autres caractéristiques et avantages de l'invention ressortiront de la description qui va suivre, donnée à titre d'exemple non limitatif, en référence à la figure unique, qui représente schématiquement un dispositif d'assistance suivant l'invention.

Sur la figure, on a représenté un dispositif 1 d'assistance de préparation culinaire dit « interactif », qui comporte une pluralité d'appareils électroménagers 10, 20, 30 et un appareil de contrôle et de commande 2 desdits appareils électroménagers. L'appareil de contrôle et de commande 2 est pourvu de moyens d'affichage 3 et de moyens de sélection 4, qui peuvent se présenter respectivement comme un écran et un clavier, ou être rassemblés en un écran tactile éventuellement associé à un pointeur. Ce type d'appareils est connu et largement diffusé sous la forme d'ordinateurs de poche, fonctionnant sous alimentation par batteries, rechargeables lorsque l'appareil est placé sur une embase connectée au réseau local d'alimentation électrique. L'appareil est destiné à recevoir des signaux d'état SE caractéristiques de l'état des appareils électroménagers 10, 20, 30 et à émettre vers eux des signaux de commande SC.

Les moyens de sélection 4 permettent à un utilisateur de sélectionner une préparation culinaire préalablement enregistrée et modélisée comme une séquence d'étapes de préparation. Cette modélisation est accessible à l'utilisateur, soit en étant mémorisée directement dans l'appareil de contrôle et de commande 2, soit par échange de données avec un serveur distant, auquel l'appareil peut être relié par tout moyen approprié connu, par exemple par l'intermédiaire d'un réseau câblé.

Les appareils électroménagers 10, 20, 30 sont ceux qui interviennent dans la préparation culinaire choisie par l'utilisateur : ce sont par exemple un appareil de pesage d'aliments 10, un robot ménager 20 et un four 30.

Certaines des étapes de préparation prises isolément, par opposition à une phase de préparation purement manuelle à exécuter par l'utilisateur sans le concours d'aucun des appareils électroménagers à sa disposition, constituent une phase élémentaire assistée mettant en oeuvre un premier groupe d'appareils électroménagers en associant à chacun d'eux des paramètres de fonctionnement. Le premier groupe d'appareils peut être compris comme le groupe d'appareils « actifs » durant ladite phase, ce qui sera supposé par la suite par mesure de simplification, mais peut s'étendre à tout appareil recevant un signal de commande SC quel qu'il soit, y compris un signal d'arrêt ou de blocage.

La modélisation de la préparation culinaire consiste non seulement dans la description et le séquencement des étapes de préparation, comme il est d'usage dans une présentation traditionnelle de recette de cuisine, mais également dans l'affectation, pour une phase élémentaire assistée donnée, de paramètres de fonctionnement à chaque appareil électroménager actif durant cette phase ; ces paramètres pouvant être par exemple une vitesse de rotation d'arbre pour le robot ménager 20, une température et un temps de cuisson pour le four 30.

Au cours d'au moins une phase élémentaire assistée, l'appareil de contrôle et de commande 2 reçoit un signal d'état SE de chacun des appareils électroménagers 10, 20, 30 d'un deuxième groupe, et émet vers chacun des appareils électroménagers du premier groupe un signal de commande SC dépendant d'une part desdits signaux d'état SE, et d'autre part des paramètres de fonctionnement associés à chacun des appareils électroménagers 10, 20, 30 du premier groupe et à ladite phase élémentaire assistée. L'élaboration de signaux de commande SC à partir de signaux d'état SE de certains appareils permet de tenir compte, dans le déroulement des instructions et la réalisation des étapes de préparation, des étapes antérieures et des contraintes dues aux appareils 10, 20, 30. Par exemple, on peut prévoir que l'appareil de contrôle 2 ne puisse émettre une commande de chauffage du four 30 uniquement lorsque le four 30 est sous tension, et que l'étape antérieure mettant en oeuvre le robot 20 a été réalisée. La réalisation de l'étape antérieure peut être signalée par l'état - « à l'arrêt » consécutivement à l'écoulement d'un temps d'action déterminé - du robot 20, ou encore par une action de l'utilisateur. Si l'on considère cette étape de cuisson au four 30 comme ultime dans une préparation culinaire donnée, le four 30 constitue l'appareil « actif » - du premier groupe -, et le robot ainsi que le four les appareils du deuxième groupe, c'est-à-dire ceux dont l'état est contrôlé avant l'émission par l'appareil de contrôle et de commande 2 d'un signal de commande SC à l'appareil « actif ». On voit bien qu'un ou plusieurs appareils peuvent à la fois faire partie du premier et du deuxième groupe d'appareils, c'est-à-dire être contrôlés avant de recevoir un signal de commande.

Suivant une caractéristique particulière de l'invention, les appareils électroménagers 10, 20, 30 et l'appareil de contrôle et de commande 2 sont reliés par un réseau câblé, par lequel transitent les signaux d'état SE et les signaux de commande SC. Le réseau câblé peut être le réseau d'alimentation électrique lui-même, un réseau interne spécifiquement affecté à un ensemble d'appareils domestiques, ou encore un réseau utilisé pour la téléphonie à la condition que les appareils électroménagers 10, 20, 30 soient équipés d'un modem.

Alternativement, ou en combinaison, les signaux d'état SE ou les signaux de commande SC sont des signaux optiques, qui sont par exemple transmis par un réseau câblé de fibres optiques. Dans l'état actuel de l'équipement domestique, et pour des considérations de coût, il est avantageux de prévoir que les signaux optiques soient de type infrarouge avec un mode de transmission sans câble.

L'invention vise également un procédé particulier susceptible d'être mis en oeuvre par un dispositif d'assistance de préparation culinaire du type qui vient d'être décrit.

Un tel procédé d'assistance de préparation culinaire consiste à aider un utilisateur à réaliser une préparation culinaire préenregistrée de son choix au moyen d'une pluralité d'appareils électroménagers 10, 20, 30 et d'un appareil de contrôle et de commande 2. Il comporte successivement les étapes suivantes :
- 1 l'utilisateur sélectionne une préparation culinaire sur l'appareil de contrôle et de commande 2 ;
- 2 l'appareil de contrôle et de commande 2 affiche les étapes de réalisation de la préparation culinaire sélectionnée ; de préférence, l'affichage évolue en tenant compte de l'avancement de la réalisation de la recette, en mettant en évidence le descriptif de l'étape en cours de réalisation ;
- 3 au début d'au moins une étape de réalisation de la préparation culinaire, l'appareil de contrôle et de commande 2 sollicite au moins un des appareils électroménagers 10, 20, 30 et reçoit un signal SE significatif de son état ; un tel signal SE permet par exemple à l'appareil de contrôle et de commande 2 de déterminer si ledit appareil ménager 10, 20, 30 est prêt à travailler, c'est-à-dire s'il est sous-tension ;
- 4 durant au moins une étape de réalisation de la préparation culinaire, l'appareil de contrôle et de commande 2 émet un signal de commande SC vers au moins un des appareils électroménagers 10, 20, 30 ; le signal de commande SC est émis par exemple lorsque l'utilisateur sélectionne, sur les moyens de sélection 4, une instruction de marche, le signal de commande SC contenant les paramètres de fonctionnement de l'appareil 10, 20, 30 pour la phase en cours. Il peut s'agir par exemple d'un temps et d'une température de cuisson délivrés à un four 30 ;
- 5 à la fin de chaque étape de réalisation de la préparation culinaire, l'appareil de contrôle et de commande 2 reçoit un signal de fin d'étape ; ce signal permet à l'appareil de contrôle et de commande 2 de disposer de l'information selon laquelle une étape de la préparation a été réalisée, et de se situer dans le processus de préparation de façon à mettre à jour l'affichage, les paramètres de fonctionnement et l'identité des appareils à solliciter ;
- 6 le procédé prend fin lorsque la préparation est achevée, ou réitère l'étape 3.

L'invention, comme on l'a vu, propose un mode interactif d'utilisation d'appareils électroménagers, dans lequel l'utilisateur est guidé durant tout le déroulement d'une préparation, l'interface de dialogue entre les appareils électroménagers et l'utilisateur étant constitué de l'appareil de contrôle et de commande, et les appareils électroménagers s'influençant mutuellement par l'intermédiaire de ce même appareil de contrôle et de commande.

Si l'on reprend le procédé qui vient d'être décrit pour réaliser une préparation simple nécessitant l'intervention de trois types d'appareils, à savoir une balance de pesage d'aliments 10, un robot 20 et un four 30, le caractère interactif du procédé peut s'illustrer comme suit :

L'utilisateur qui vient de sélectionner une recette préenregistrée suit les indications qui s'affichent à l'écran 3 de l'appareil de contrôle et de commande 2 ; l'appareil de contrôle et de commande 2 interroge la balance 10 afin de savoir si elle est en état de fonctionner : si non, un message indique à l'utilisateur qu'il faut, brancher cet appareil 10 ; l'appareil de contrôle 2 indique ensuite à l'utilisateur qu'il doit peser une certaine quantité d'un aliment, la balance recevant pour sa part une valeur cible de pesage ; lorsque l'utilisateur place le produit alimentaire sur la balance 10, celle-ci émet les données de pesage vers l'appareil de contrôle 2 qui peut dialoguer avec l'utilisateur en fonction de ces données ; une fois la valeur cible atteinte et le produit retiré de la balance 10, la fin de la première étape est signifiée à l'appareil de contrôle 2, ce qui permet de déclencher le début de la deuxième étape, durant laquelle le produit alimentaire doit être traité dans le robot ménager 20 ; l'appareil de contrôle 2, qui a reçu un signal d'état SE indiquant que le robot 20 est sous tension, lui délivre un signal de commande SC qui consiste en une vitesse de rotation du couteau et en un signal de mise en route, dès lors que l'utilisateur a confirmé le début de la phase ; pendant cette phase, l'appareil de contrôle et de commande 2 peut signifier au four 30 un ordre de préchauffage, et ensuite ajuster la température du four 30 en fonction de l'instant où l'utilisateur valide le début de la phase de cuisson, à la suite de l'arrêt du robot 20.

On le voit, l'invention ouvre un éventail très étendu de possibilités correspondant à des modes plus ou moins guidés, qui permettent à un utilisateur, même s'il est totalement inexpérimenté dans l'usage d'appareils électroménagers et dans la réalisation de recettes de cuisine, d'optimiser l'usage de ses appareils électroménagers.

## Revendications

1. Dispositif d'assistance de préparation culinaire, comportant une pluralité d'appareils électroménagers (10, 20, 30) et un appareil de contrôle et de commande (2) à distance desdits appareils électroménagers (10, 20, 30), l'appareil de contrôle et de commande (2) étant pourvu de moyens d'affichage (3) et de moyens de sélection (4), et étant destiné à recevoir des signaux d'état (SE) caractéristiques de l'état desdits appareils électroménagers et à émettre vers eux des signaux de commande (SC),
**caractérisé en ce que** les moyens de sélection (4) permettent à un utilisateur de sélectionner une préparation culinaire préalablement enregistrée et modélisée comme une séquence d'étapes de préparation, dont certaines prises isolément constituent une phase élémentaire assistée mettant en oeuvre un premier groupe d'appareils électroménagers en associant à chacun d'eux des paramètres de fonctionnement, et **en ce que**, au cours d'au moins une phase élémentaire assistée, l'appareil de contrôle et de commande (2) reçoit un signal d'état (SE) de chacun des appareils électroménagers d'un deuxième groupe, et émet vers chacun des appareils électroménagers du premier groupe un signal de commande (SC) dépendant d'une part desdits signaux d'état (SE), et d'autre part des paramètres de fonctionnement associés à chacun des appareils électroménagers du premier groupe et à ladite phase élémentaire assistée.

2. Dispositif d'assistance de préparation culinaire selon la revendication 1,
**caractérisé en ce que** les appareils électroménagers (10, 20, 30) et l'appareil de contrôle et de commande (2) sont reliés par un réseau câblé, par lequel transitent les signaux d'état (SE) et les signaux de commande (SC).

3. Dispositif d'assistance de préparation culinaire selon la revendication 1 ou 2,
**caractérisé en ce que** les signaux d'état (SE) ou les signaux de commande (SC) sont des signaux optiques.

4. Dispositif d'assistance de préparation culinaire selon l'une quelconque des revendication 1 à 4,
**caractérisé en ce que** la pluralité d'appareils électroménagers (10, 20, 30) comprend au moins l'un des appareils suivants : appareil électrique de pesage d'aliments (10), robot ménager (20), four (30).

5. Procédé mis en oeuvre dans le dispositif d'assistance de préparation culinaire suivant l'une quelconque des revendications 1 à 4, consistant à aider un utilisateur à réaliser une préparation culinaire préenregistrée de son choix au moyen d'une pluralité d'appareils électroménagers (10, 20, 30) et d'un appareil de contrôle et de commande (2), procédé comportant successivement les étapes suivantes :
■ - 1 l'utilisateur sélectionne une préparation culinaire sur l'appareil de contrôle et de commande (2) ;
■ - 2 l'appareil de contrôle et de commande (2) affiche les étapes de réalisation de la préparation culinaire sélectionnée ;
■ - 3 au début d'au moins une étape de réalisation de la préparation culinaire, l'appareil de contrôle et de commande (2) reçoit un signal (SE) significatif de l'état d'au moins un des appareils électroménagers (10, 20, 30) ;
■ - 4 durant au moins une étape de réalisation de la préparation culinaire, l'appareil de contrôle et de commande (2) émet un signal de commande (SC) vers au moins un des appareils électroménagers (10, 20, 30) ;
■ - 5 à la fin de chaque étape de réalisation de la préparation culinaire, l'appareil de contrôle et de commande (2) reçoit un signal de fin d'étape.
■ - 6 le procédé prend fin ou réitère l'étape 3.

## Patentansprüche

1. Vorrichtung zur Unterstützung bei einer kulinarischen Zubereitung mit einer Mehrzahl von Elektrohaushaltsgeräten (10, 20, 30) und einem Fernüberwachungs- und Steuergerät (2) der Elektrohaushaltsgeräte (10, 20, 30), wobei das Überwachungs- und Steuergerät (2) mit einer Anzeigevorrichtung (3) und Wahlvorrichtung (4) versehen ist und dazu dient, Zustandssignale (SE) zu empfangen, die für den Zustand der Elektrohaushaltsgeräte charakteristisch sind, und diesen Steuersignale (SC) zu senden, **dadurch gekennzeichnet, daß** die Wahlvorrichtung (4) einem Benutzer ermöglicht, eine kulinarische Zubereitung zu wählen, die zuvor registriert und als eine Sequenz von Zubereitungsschritten ausgearbeitet wurde, von der bestimmte Schritte für sich eine unterstützte Elementarphase bilden, die eine erste Gruppe von Elektrohaushaltsgeräten einsetzt, indem jedem derselben Funktionsparameter zugeteilt werden, und im Verlauf mindestens einer unterstützten Elementarphase das Überwachungs- und Steuergerät (2) von jedem der Elektrohaushaltsgeräte einer zweiten Gruppe ein Zustandssignal (SE) empfängt und jedem der Elektrohaushaltsgeräte der ersten Gruppe ein Steuersignal (SC) sendet, das einerseits von den Zustandssignalen (SE) und andererseits von den jedem der Elektrohaushaltsgeräte der ersten Gruppe zugeordneten Funktionsparametern und der unterstützten Elementarphase abhängt.

2. Vorrichtung zur Unterstützung der kulinarischen Zubereitung nach Anspruch 1, **dadurch gekennzeichnet, daß** die Elektrohaushaltsgeräte (10, 20, 30) und das Überwachungs- und Steuergerät (2) durch ein Kabelnetz verbunden sind, durch welches die Zustandssignale (SE) und die Steuersignale (SC) laufen.

3. Vorrichtung zur Unterstützung einer kulinarischen Zubereitung nach Anspruch 1 oder 2, **dadurch gekennzeichnet, daß** die Zustandssignale (SE) oder die Steuersignale (SC) optische Signale sind.

4. Vorrichtung zur Hilfe bei einer kulinarischen Zubereitung nach einem der Ansprüche 1 bis 4, **dadurch gekennzeichnet, daß** die Mehrzahl der Elektrohaushaltsgeräte (10, 20, 30) mindestens eines der folgenden Geräte umfaßt: elektrische Waage zum Wiegen von Nahrungsmitteln (10), Haushaltsmixer (20), Ofen (30).

5. Verfahren, das in der Vorrichtung zur Hilfe bei der kulinarischen Zubereitung nach einem der Ansprüche 1 bis 4 durchgeführt wird, und darin besteht, einem Benutzer Hilfestellung bei der Realisierung einer von ihm ausgewählten vorregistrierten kulinarischen Zubereitung mittels einer Mehrzahl von Elektrohaushaltsgeräten (10, 20, 30) und einem Überwachungs- und Steuergerät (2) zu geben, wobei das Verfahren nacheinander die folgenden Schritte aufweist:
- 1 der Benutzer wählt eine kulinarische Zubereitung am Überwachungs- und Steuergerät (2);
- 2 das Überwachungs- und Steuergerät (2) zeigt die Schritte der Realisierung der gewählten kulinarischen Zubereitung an;
- 3 zu Beginn mindestens eines Schritts der Realisierung der kulinarischen Zubereitung empfängt das Überwachungs- und Steuergerät (2) ein Signal (SE), das für den Zustand mindestens eines der Elektrohaushaltsgeräte (10, 20, 30) signifikant ist;
- 4 während mindestens eines Schritts der Realisierung der kulinarischen Zubereitung sendet das Überwachungs- und Steuergerät (2) ein Steuersignal (SC) zu mindest einem der Elektrohaushaltsgeräte (10, 20, 30);
- 5 am Ende jedes Schritts der Realisierung der kulinarischen Zubereitung empfängt das Überwachungs- und Steuergerät (2) ein Signal des Endes des Schrittes;
- 6 das Verfahren endet oder wiederholt den Schritt 3.

## Claims

1. Device for assistance in culinary preparation, comprising a plurality of domestic electrical appliances (10, 20, 30) and an apparatus (2) for controlling and actuating said domestic electrical appliances (10, 20, 30) at a distance, the control and actuation apparatus (2) being provided with display means (3) and selection means (4), and being intended to receive state signals (SE) characteristic of the state of said domestic electrical appliances and to send control signals (SC) to them, **characterised in that** the selection means (4) enable a user to select a culinary preparation previously recorded and modelled as a sequence of preparation steps, some of which taken separately constitute an assisted elementary phase using a first group of domestic electrical appliances associating operating parameters with each of them, and **in that**, during at least one assisted elementary phase, the control and actuation apparatus (2) receives a state signal (SE) from each of the domestic electrical appliances in a second group, and sends to each of the domestic electrical appliances in the first group a control signal (SC) depending firstly on said state signals (SE) and secondly on the operating parameters associated with each of the domestic electrical appliances in the first group and with said assisted elementary phase.

2. Device for assistance with culinary preparation according to claim 1, **characterised in that** the domestic electrical appliances (10, 20, 30) and the control and actuation apparatus (2) are connected by a cabled network, by means of which the state signals (SE) and the control signals (SC) pass.

3. Device for assistance in culinary preparation according to claim 1 or 2, **characterised in that** the state signals (SE) or the control signals (SC) are optical signals.

4. Device for assistance in culinary preparation according to any one of claims 1 to 4, **characterised in that** the plurality of domestic electrical appliances (10, 20, 30) comprises at least one of the following appliances : electrical food weighing appliance (10), food processor (20), oven (30).

5. Method implemented in the device for assistance in culinary preparation according to any one of claims 1 to 4, consisting of assisting a user to carry out a pre-recorded culinary preparation of his choice by means of a plurality of domestic electrical appliances (10, 20, 30) and a control and actuation apparatus (2), said method comprising successively the following steps :
- 1 the user selects a culinary preparation on the control and actuation apparatus (2);
- 2 the control and actuation apparatus (2) displays the steps for effecting the selected culinary preparation ;
- 3 at the start of at least one step of producing the culinary preparation, the control and actuation apparatus (2) receives a signal (SE) signifying the state of at least one of the domestic electrical appliances (10, 20, 30);
- 4 during at least one step of producing the culinary preparation, the control and actuation apparatus (2) sends a control signal (SC) to at least one of the domestic electrical appliances (10, 20, 30);
- 5 at the end of each step of producing the culinary preparation, the control and actuation apparatus (2) receives a signal of end step ;
- 6 the method ends or reiterates step 3.
